# EUROPEAN PATENT APPLICATION

(11) **EP 4 718 057 A1**
(43) Date of publication of application: **01.04.2026**
(21) Application number: 24202712.6
(22) Date of filing: 25.09.2024
(51) Int. Cl.: G01N 21/05, G01N 21/03, G01N 21/3504

(54) **ANAESTHETIC GAS MONITORING AND ALERTING WEARABLE BADGE**

(71) Applicant: Munster Technological University, Bishopstown T12 P928 Cork (IE)
(72) Inventor: The designation of the inventor has not yet been filed
(74) Representative: Purdylucey Intellectual Property

(57) **Abstract**

Disclosed is a system for monitoring and detecting anaesthetic gases in a sample gas, that includes a portable device that comprises: a gas detection chamber. The gas detection chamber includes a gas inlet, and a gas outlet, and a vacuum pump connected to the gas outlet for creating a vacuum in the gas detection chamber, thereby causing a flow of sample gas in the gas detection chamber, through the gas inlet, and first and second ends that comprise first and second IR transparent windows respectively. The portable device further comprises at least one IR emission source externally disposed opposite the first end, at least one detector externally disposed opposite the second end for receiving the IR light transmitted by the at least one IR emission source through the first and second IR transparent windows, and a processing unit that is configured to process the data detected by the at least one detector, wherein the processing unit determines the level of anaesthetic gas in the sample gas based on the IR light received by the at least one detector.

## Description

### Field

The present invention relates to the detection and monitoring of anaesthetic gas levels in the environment. More particularly, the invention relates to analysing the IR absorption of ambient gas and a user alerting system.

### Background

There are many risks associated with constant inhalation of residual anaesthetic gases, one of the most significant being infertility. It is known that exposure to anaesthetic gases increases the likelihood of a mother miscarrying, or their child having birth defects. While many professionals working with anaesthetic gases are aware of the risks associated, inadequate maintenance and use of anaesthetic equipment exposes them to harmful gases. This issue is particularly critical in veterinary medicine, where a significant portion of the workforce consists of women of childbearing age. The relaxed procedures regarding anaesthetic equipment maintenance pose a serious threat to the well-being of these veterinarians and their future families. Therefore, it is crucial to diligently follow protocols, regularly inspect the equipment for leaks, and ensure proper ventilation in surgical areas for the protection of professionals' health.

While diligent adherence to established safety protocols is imperative, there exists a need to monitor the environment to ensure the levels of residual anaesthetic gases are acceptable. Existing devices to measure these levels suffer from limitations such as being bulky and confined to specific locations, which can result in reduced effectiveness when it comes to detecting concentrated areas of gas. The main problem with these devices is that they may not accurately determine the exposure of an individual that moves around, often being far enough away from a stationary device so as to make the analysis performed by the device not sufficiently applicable to the individual.

### Summary

In an aspect of the present invention, there is provided a system for monitoring and detecting anaesthetic gases in a sample gas, that includes a portable device that comprises: a gas detection chamber that comprises a gas inlet; and a gas outlet, and a vacuum pump connected to the gas outlet for creating a vacuum in the gas detection chamber, thereby causing a flow of sample gas in the gas detection chamber, through the gas inlet; and first and second ends that comprise first and second IR transparent windows respectively; at least one IR emission source externally disposed opposite the first end; at least one detector externally disposed opposite the second end for receiving the IR light transmitted by the at least one IR emission source through the first and second IR transparent windows; and a processing unit that is configured to process the data detected by the at least one detector, wherein the processing unit determines the level of anaesthetic gas in the sample gas based on the IR light received by the at least one detector.

In an embodiment of the present invention, the processing unit is configured to determine the level of anaesthetic gas in the sample gas based on absorption of the IR light in the sealed gas chamber, and wherein more anaesthetic gas leads to more absorption of the IR light in the sealed gas chamber, and receipt of less IR light by the at least one detector.

In an embodiment of the present invention, the system further comprises a back-end platform communicatively coupled to the portable device, wherein the portable device transmits detected data to the back-end platform for storage and analysis, and a front-end platform communicatively coupled to the back-end platform, wherein the front-end platform comprises a user interface for presenting the results of analysed data to the user.

In an embodiment of the present invention, the portable device is a wearable badge device that comprises an accelerometer, and the portable device operates in a low power mode until movement of user is detected by the accelerometer.

In an embodiment of the present invention, wherein the first and second IR transparent windows are made of Germanium (Ge), Zinc Selenide (ZnSe), or Calcium Fluoride (CaF2).

In an embodiment of the present invention, the portable device further comprises one or more environmental sensors selected from a group consisting of: a radiation sensor, a gas sensor, a temperature sensor, humidity sensor, an Inertial Measurement Unit (IMU) and a volatile organic sensor (VOC), and wherein the processing unit analyses data detected by the one or more environmental sensors. The gas sensor may employ IR optical principles. The one or more environmental sensors may measure temperature, humidity, Relative Barometric Pressure, Volatile Organic Compounds (VOCs), volatile sulfur compounds (VSCs), particulate matter, CO₂, and other gases such as carbon monoxide and hydrogen in the part per billion (ppb) range. The radiation sensor may be configured to detect beta radiation (electrons), gamma radiation (photons) and X-rays. The IMU may include accelerometer and gyroscope for user activity monitoring.

In an embodiment of the present invention, the user interface platform alerts the user via audio and visual notifications when instantaneous levels of anaesthetic gases in the sample gas reaches a predetermined threshold.

In an embodiment of the present invention, each of the sealed gas chamber, the gas inlet and gas outlet are formed of steel.

In an embodiment of the present invention, each of the gas inlet, gas outlet and sealed gas chamber are formed of silvered plastics.

According to the invention there is provided, as set out in the appended claims, a device which monitors anaesthetic gases, along with various other environmental quality factors, which transmits this data to a server for storage and analysis, the results of which are presented via a user interface to communicate the results of the analysis to the user and alert them of any predetermined exposure limits reached.

Various embodiments of the present invention facilitate the continuous monitoring of the environment directly in contact with a user and the ability to alert said user to relevant information regarding this environment. Of particular importance is the use of the sealed gas detection chamber in combination with IR sources and detectors to measure the levels of anaesthetic gases. Details of various embodiments provide details of the back-end platforms in which various data storage, management, and analyses are done and the user interface in which data visualisation is used to provide relevant information about the environment to the user.

The detection of anaesthetic gases is performed in the sealed gas detection chamber into which ambient air is pulled, via a gas inlet, by a vacuum pump connected to a gas outlet. The sealed gas detection chamber has first and second ends that comprise first and second IR transparent windows. At least one IR emission source is externally disposed opposite the first end, and at least one detector is disposed externally opposite the second end. Each IR transparent window is an optical filter.

Various advantages of the present invention include the ability of the device to be worn, which results in the monitoring of the environment directly in contact with a user. By using such a device rather than a conventional stationary anaesthetic gas monitor, the resulting data is specific to an individual's exposure. The system described in the present invention provides a unified back-end for the storage and analysis of the environmental data and a unified front-end for interaction with the user, which provides a single source of all relevant environmental exposure data.

### Brief Description of the Drawings

The invention will be more clearly understood from the following description of an embodiment thereof, given by way of example only, with reference to the accompanying drawings, in which:
FIG. 1 illustrates a gas detection sensor, in accordance with an embodiment of the present invention;

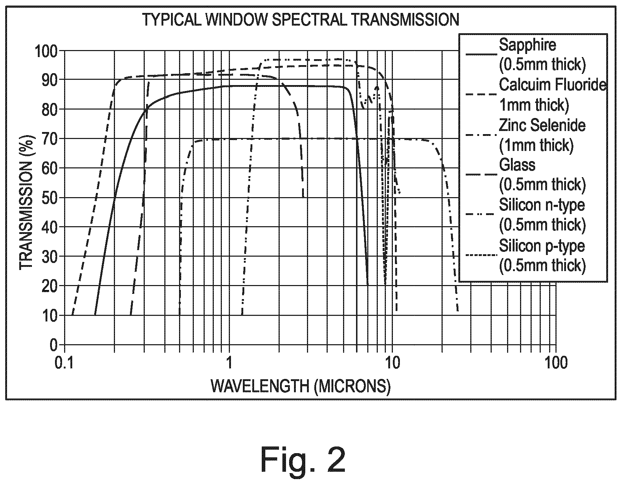

FIG.2 illustrates the typical window spectral transmission for various window materials;
FIG.3A illustrates an isometric view of a flow simulation test for the gas detection chamber, in accordance with an embodiment of the present invention;
FIG.3B illustrates a plan view of a flow simulation test for the gas detection chamber, in accordance with an embodiment of the present invention;
FIGs.4A and 4B illustrates the assembly of the gas chamber and the pump, in accordance with an embodiment of the present invention; FIG.5A illustrates a portable badge device that implements the gas detection sensor of FIG.1;
FIG.5B illustrates the assembly of the portable badge device of FIG.5A in an enclosure;
FIG.6 illustrates a system implementing the portable badge device for monitoring and alerting the presence of anaesthetic gases, in accordance with an embodiment of the present invention;
FIG.7A illustrates the initialisation stage of an exemplary firmware flowchart;
FIG.7B illustrates the main functional loop stage of an exemplary firmware flowchart;
FIG.8A illustrates a representative Agent Alert display of an exemplary user interface; and
FIG.8B illustrates a representative Trends display of an exemplary user interface.

### Detailed Description of the Drawings

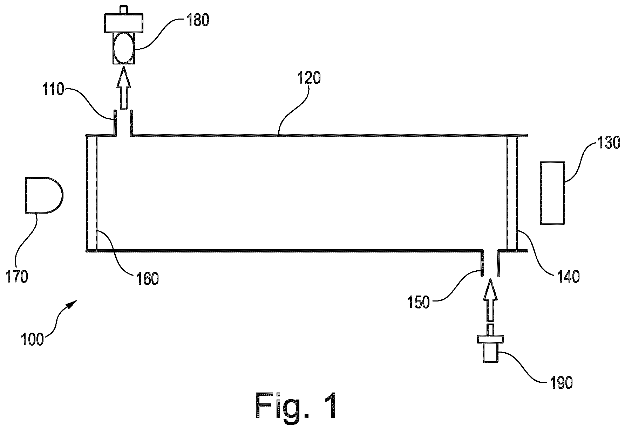

FIG.1 illustrates a gas detection sensor 100 which operates by causing a flow of sampled gas through a sealed chamber 120. On either end of the sealed chamber 120 is an IR transparent window 140 and 160. An IR emission source 170 is placed at one end and a detector 130 (or in this case two) is placed at the other end. The level of gas detected is then inferred by the level of IR picked up by the sensors, where more target gas results in more absorption of the IR light, hence less IR light received by the detector 130. Further, a small electric pump 180 is provided that creates a vacuum at the gas outlet 110 end of the gas chamber 120. This causes atmospheric air to be drawn through the chamber at the gas inlet 150. An inline filter 190 is provided at the gas inlet 150 to screen out unwanted particles. In an example, the sealed chamber 120 is manufactured in-house using 12mm OD (9mm ID) stainless steel tubes cut into 25mm length segments. An inlet and outlet tube consisting of 2mm diameter stainless steel tubes may be placed 20mm apart (centre to centre)added using the metal epoxy.

Although not shown here, an actuator is provided for controlling the light source inside the chamber 120. This actuator allows for the determination of the gas present within the chamber 120 by assessing the changes in light transmission or absorption. It aids in identifying and analysing the composition of the gas, contributing to the overall functionality of the system.

In an example, the pump 180 may be a 3V 0.9W 330mA Micro Electric Diaphragm pump intended as a component in Sphygmomanometers. This has been adapted with an inlet added so that it may operate as a vacuum pump to suck air into the chamber 120. Testing indicates that said pump 180 is capable of producing over 200ml/min in volume flow at 3V and between 100 - 200ml/min when sucking through the inline filter 190. This is an appropriate volume flow as it is comparable to previous tests performed with the sensors and the Datex patient monitor AA gas analyser.

In an exemplary prototype, the gas detection sensor 100 may be manufactured in-house using 12mm OD (9mm ID) stainless steel tubes cut into 25mm segments. Stainless steel may be chosen due to its non-porous and smooth surface characteristics as well as heat dissipation characteristics. The heat dissipation could be an issue in the chamber if it is manufactured from silvered plastics if the emitter operates for long periods. In the case of this prototype, it is envisaged that the emitter is only used for short bursts in the duty cycle in order to conserve battery power. The use of emitter for short bursts in the duty cycle enables cooling down of the emitter to avoid temperature rise in a chamber, and minimise the impact of the temperature in the measurement of gas concentration. The sampling frequency is chosen to balance precision against battery life.

Stainless steel tubing may be chosen for cost effectiveness at this point, as injection moulding and silvering bespoke gas chambers from plastics may be financially unfeasible for a small quantity of prototypes. An inlet and outlet tube consisting of 2mm diameter stainless steel tubes and the two optical IR transmission windows may be added using metal epoxy.

The gas detection sensor 100 is capable of detecting anaesthesia gas with remarkable precision. The design of the chamber 120 is tailored specifically to address the challenge of accurately detecting and monitoring anaesthesia gas levels. The gas detection sensor 100 is configured to capture even minute traces of anaesthesia gas present in the environment. This level of precision ensures that potential risks associated with the gas can be identified promptly and effectively.

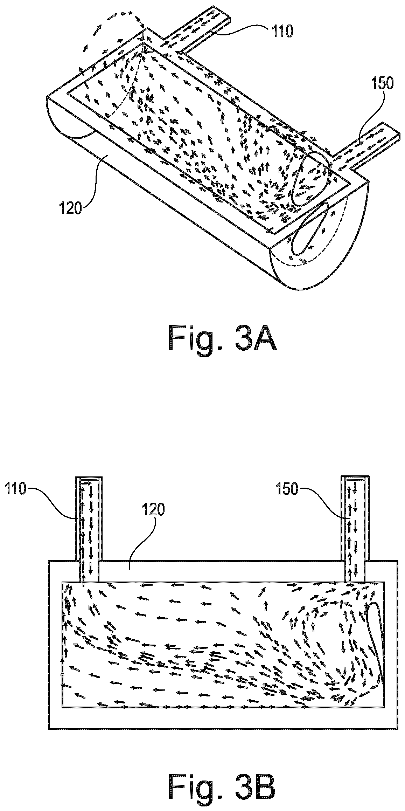

FIGs.3A and 3B illustrate cross-sectional views of the gas detection chamber 120, in accordance with an embodiment of the present invention. Said views illustrate a flow simulation test for the gas chamber 120 showing the direction and speed of the gas flow within.

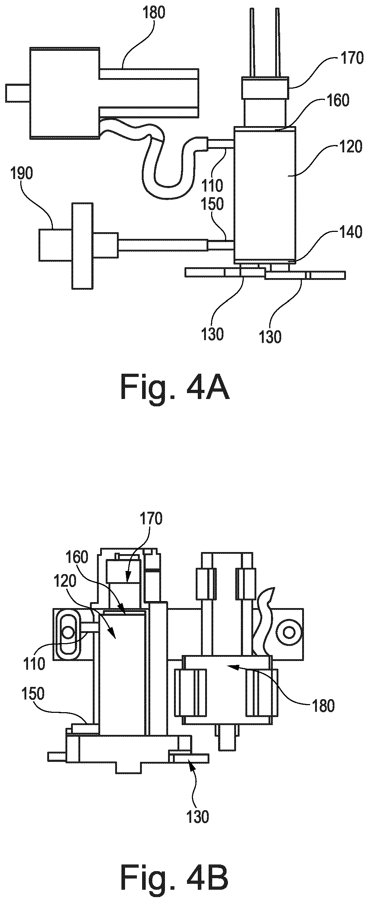

FIGs.4A and 4B illustrates the assembly of the gas chamber 120 and the pump 180, in accordance with an embodiment of the present invention.

The inline filter 190 may be connected to the gas inlet 150 to screen out unwanted particles. The inline filter 190 may be adapted to keep humidity/condensation and small particle impurities away from the sensing chamber 120. The pump 180 may be connected to the gas outlet 110 to create vacuum pressure in the gas chamber 120. Illustrated is an embodiment in which an IR source 170 is connected to one end of the gas chamber and two IR detectors 130 are connected to the other end. In embodiments, the positioning of the components may vary from this, as it is just a schematic diagram.

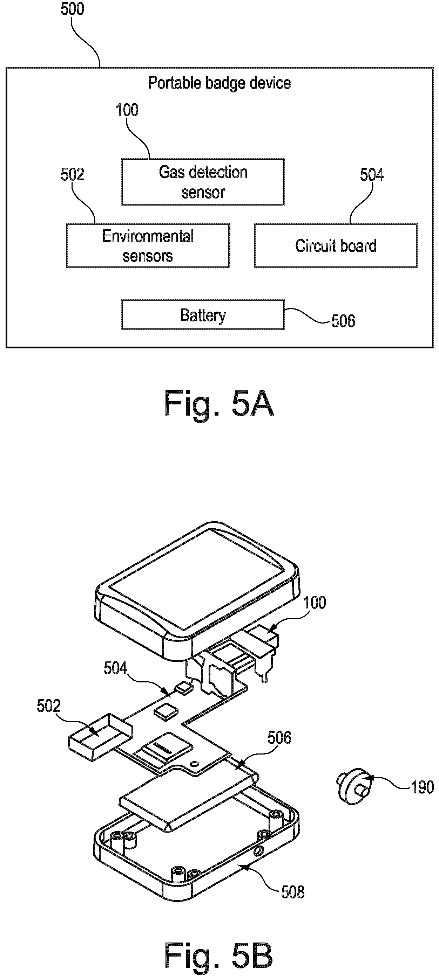

FIG.5A illustrates a portable badge device 500 that implements the gas detection sensor 100 as described earlier. The portable badge device 100 may be worn or carried by the users in an environment where there is a risk of inhalation of anaesthetic gases.

The portable badge device 500 includes the gas detection sensor 100 for monitoring the presence of anaesthetic gases, and a set of environmental sensors 502 encased in an enclosure along with a circuit board 504 and a battery 506. The circuit board 504 includes a microcontroller and the battery 506 is a lithium-polymer battery. The microcontroller may be provided with radio capability for wireless communications with other devices.

The set of environmental sensors 502 may include an accelerometer, a humidity sensor, a gas sensor, a temperature sensor and a radiation sensor. The accelerometer may include an inertial measurement unit (IMU) and enables the device 500 to detect motion or movement. By monitoring changes in acceleration, the accelerometer helps determine if the device 500 is being moved or is stationary. This information is useful for triggering data collection, power management, and other relevant system actions. As taking an anaesthetic reading is the most energy-intensive activity (due especially to the pump's power draw), this is not done unless the badge is in motion (magnitude of acceleration above a threshold), as it will be when worn.

Further, the radiation sensor may operate based on pin diode effect and plays a crucial role in detecting and measuring radiation levels in the surrounding environment. This information is valuable for assessing potential risks and ensuring safety measures are in place. The sensors for measuring temperature, relative humidity, and VOC (volatile organic compounds) provide valuable data regarding the environmental conditions within the vicinity of the device 500. The temperature and relative humidity sensors enable monitoring and control of these variables, ensuring optimal conditions for the device 500. The VOC sensor detects and quantifies volatile organic compounds, which are important indicators of air quality.

It may be noted that the portable badge device 500 operates in a low power consumption mode until it detects movement using the accelerometer. Once movement is detected, it starts gathering data from various sensors, including temperature, relative humidity, volatile organic compounds (VOCs), radiation, and anaesthetic gas. This collected data undergoes processing, and a comparison may be made against pre-defined limits. If any of these limits are exceeded, a visual and audible alarm may be triggered. Otherwise, the device 500 reverts to low power consumption mode until further movement is detected. In an embodiment of the present invention, the circuit board 504 includes a processing unit that acts as the brain of the system, receiving input from various sensors such as temperature, humidity, VOC, radiation, and anaesthetic gas sensors. It collects the data generated by these sensors, which provides valuable insights into the environmental conditions being monitored. Once the data is collected, the processing unit carries out essential operations to analyse and interpret the information. This involves applying algorithms, calculations, and other processing techniques to derive meaningful insights from the sensor data. By processing the information, the unit transforms raw sensor readings into valuable metrics and measurements that can be easily understood and utilized.

Furthermore, the processing unit facilitates the transmission of the processed data via Wi-Fi. It establishes a connection to a network and uses Wi-Fi technology to securely transmit the analysed information to a designated destination. This allows the data to be accessed remotely, shared with other devices or platforms, and stored for further analysis or visualization.

FIG.5B illustrates the assembly of the portable badge device by enclosing various components in an enclosure 508, in accordance with an embodiment. The electronic components included are the printed circuit board 504, the battery 506, and one or more environmental sensors 502. In addition, the enclosure 508 includes the gas detection sensor 100 that is formed of a gas chamber, pump, and the inline filter 190.. The integration of the sensors within the enclosure 508 allows for enhanced monitoring capabilities, enabling the device 500 to provide accurate readings of anaesthesia gas concentrations in real-time. This information empowers users to make informed decisions about their safety and well-being.

This device 500 has the capability to assess various parameters, including radiation levels, making it a versatile tool for evaluating the overall environmental quality. By being carried by the user, the device 500 provides an on-the-go solution for assessing the surrounding environment. It can detect and measure radiation levels, providing valuable information about potential hazards or safety concerns. Moreover, the device 500 can be utilized as a standalone tool for evaluating the overall quality of the environment beyond radiation detection. It integrates multiple sensors capable of measuring various environmental factors such as temperature, humidity, and volatile organic compounds (VOCs). These measurements enable users to gain insights into the overall air quality and potential health risks associated with their surroundings.

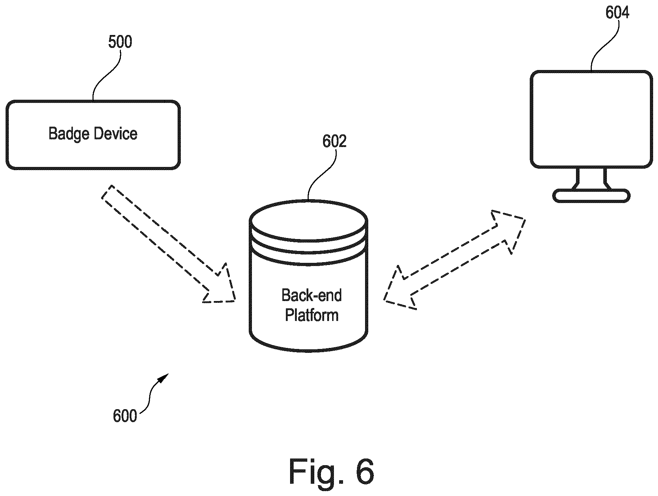

FIG.6 illustrates a system 600 implementing the portable badge device 500 for monitoring and alerting the presence of anaesthetic gases, in accordance with an embodiment of the present invention. The system 600 includes the portable badge device 500, a back-end platform 602, and a front end platform 604 communicatively coupled to the portable badge device 500.

The portable badge device 500 is configured to capture and analyse the air quality in the vicinity of the user. In an embodiment of the present invention, the portable badge device 102 captures the data from the sensors and subsequently processes to alert the user if they are in an area that poses a potential risk to their health. This may be conveyed through the visual and auditory signals, such as lights and sounds. The gathered data may be wirelessly transmitted using Wi-Fi technology and an internet connection to a server. The server may serve as a storage facility for the data, which may be then utilized to create visual representations and presentations for further analysis and interpretation.

The existence of a robust and reliable back-end platform 602 is of utmost importance in the context of storing the data transmitted by the portable badge device 500. The back-end platform 602 uses cloud based services for the storage and management of the data from the one or more portable badge devices 500. The back-end platform 602 serves as a centralized repository, efficiently storing and managing the vast amounts of data collected from the multiple portable badge devices 500. By securely storing the transmitted data, the back-end platform 602 ensures its integrity and availability for further analysis. It acts as a secure vault, safeguarding the valuable information captured by the portable badge devices 500 from loss or unauthorized access. Furthermore, the back-end platform 602 enables seamless data integration and synchronization, consolidating the data from multiple portable badge devices 500 into a unified and cohesive dataset. This integration allows for comprehensive analysis, as it facilitates the examination of trends, patterns, and correlations across different data points and timeframes. The presence of the back-end platform 602 also enables the implementation of advanced analytical techniques. Additionally, the back-end platform 602 supports scalability and flexibility, accommodating the increasing volume of data, as the number of portable badge devices 500 and users grow. It ensures that the system can handle the expanding data load without compromising performance or data integrity. Overall, the back-end platform 602 is an essential component of the system 600, providing the foundation for data storage, management, integration, and analysis. In an embodiment of the present invention, the back-end platform 602 is configured to send data wirelessly to any other connected device, locally or remotely using wireless protocols such as Zigbee, Z-Wave, WLAN, wireless M-Bus, and Bluetooth. In an example, the back-end platform 602 is an IOT platform.

The front-end platform 604 plays a crucial role in presenting and visualizing the data that has been stored and processed in the back-end platform 602. The front-end 604 facilitates a more accessible and meaningful exploration of the stored information through intuitive and user-friendly interfaces,. It enables users to interact with the data, allowing them to view and analyse it in various formats, such as graphs, charts, tables, and other visual representations. By providing a clear and concise representation of the data, the front-end platform 604 empowers users to gain insights, draw conclusions, and make informed decisions based on the analysed information.

The portable badge device 500 ensures that the user is constantly aware of the air quality and potential risks, regardless of their location. This mobility enables real-time monitoring and timely detection of any areas with elevated gas concentrations, providing users with immediate feedback and the ability to take appropriate measures to protect their health.

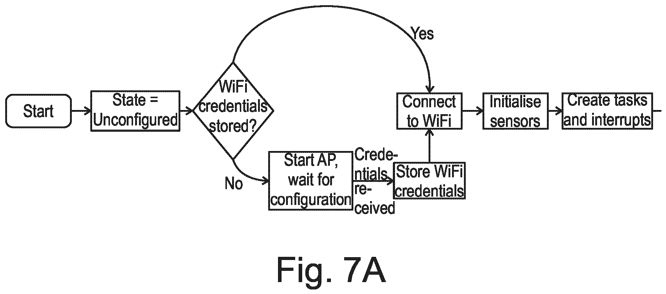

FIG.7A illustrates a high-level overview of the initialisation stage of the firmware of the system 600, in accordance with an embodiment of the present invention.

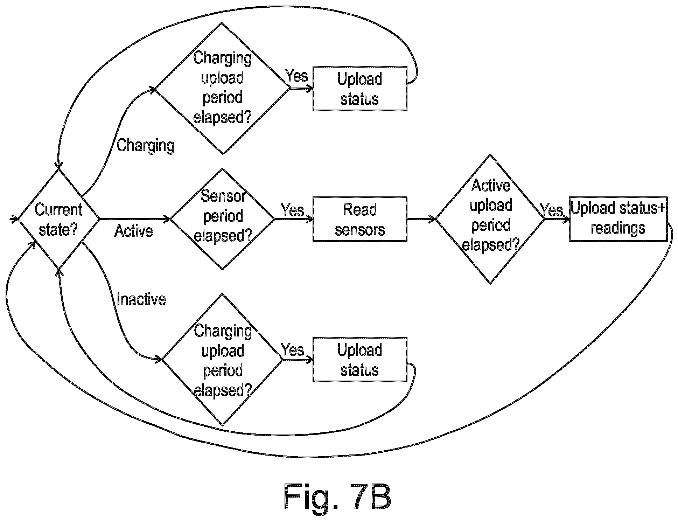

FIG.7B illustrates a high-level overview of the main functioning loop of the firmware of the system 600, in accordance with an embodiment of the present invention. In this embodiment, the program enters a loop, which reads sensor data at regular intervals and performs certain actions based on the state of the device 500.

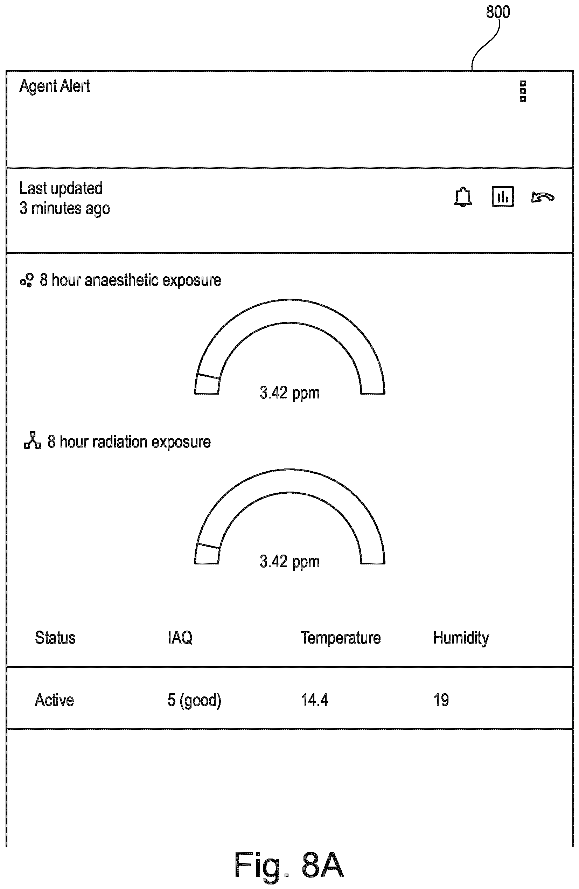

FIG. 8A illustrates an Agent Alert section of a user interface 800 provided by the front-end platform 604, in accordance with an embodiment of the present invention. In an embodiment of the present invention, the user interface 800 can be accessed through a user device connected to the internet. Suitably, the user device can be a smart phone device or electronic tablet device or similar electronic device.

The user interface 800 includes a chart of the time-averaged (8 hours in this case) exposure to both anaesthetic gasses and radiation. Also, presented are current values for various environmental conditions which include the status of the device, indoor air quality (IAQ), temperature and humidity.

In one embodiment of the present invention, the user interface 800 alerts the user if instantaneous levels of certain anaesthetic gases are above a predetermined threshold. In another embodiment of the present invention, the user interface 800 alerts the user if time averaged levels of certain anaesthetic gases are above a predetermined threshold over a predetermined time frame. In yet another embodiment of the present invention, the user interface 800 alerts the user if one or more of the values monitored by the one or more environmental sensors are instantaneously above predetermined thresholds. In yet another embodiment of the present invention, the user interface 800 alerts the user if one or more of the values monitored by the one or more environmental sensors have a time-averaged level above predetermined thresholds over a predetermined time frame.

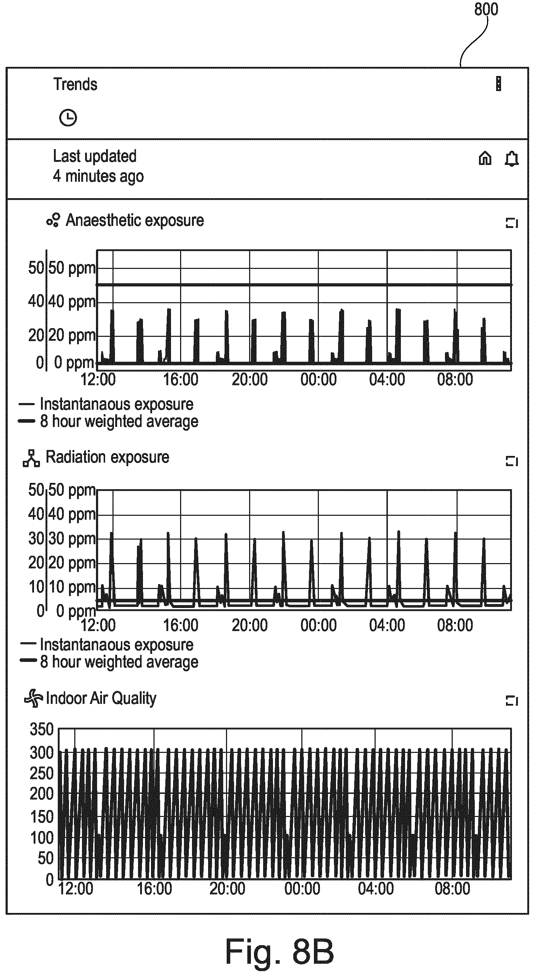

FIG.8B illustrates the trends section of the user interface 800 provided by the front-end platform 604, in accordance with an embodiment of the present invention. This includes the graphs showing how instantaneous values for anaesthetic exposure, radiations exposure and IAQ have varied over a previous time frame (roughly 12 hours in this example).

In the specification the terms "comprise, comprises, comprised and comprising" or any variation thereof and the terms include, includes, included and including" or any variation thereof are considered to be totally interchangeable, and they should all be afforded the widest possible interpretation and vice versa.

The invention is not limited to the embodiments hereinbefore described but may be varied in both construction and detail.

## Claims

1. A system for monitoring and detecting anaesthetic gases in a sample gas, comprising:
a portable device that comprises:
a gas detection chamber that comprises:
a gas inlet; and
a gas outlet, and a vacuum pump connected to the gas outlet for creating a vacuum in the gas detection chamber, thereby causing a flow of sample gas in the gas detection chamber, through the gas inlet; and
first and second ends that comprise first and second IR transparent windows respectively;
at least one IR emission source externally disposed opposite the first end;
at least one detector externally disposed opposite the second end for receiving the IR light transmitted by the at least one IR emission source through the first and second IR transparent windows; and
a processing unit that is configured to process the data detected by the at least one detector, wherein the processing unit determines the level of anaesthetic gas in the sample gas based on the IR light received by the at least one detector.

2. The system as claimed in claim 1, wherein the processing unit is configured to determine the level of anaesthetic gas in the sample gas based on absorption of the IR light in the sealed gas chamber, and wherein more anaesthetic gas leads to more absorption of the IR light in the sealed gas chamber, and receipt of less IR light by the at least one detector.

3. The system as claimed in claim 1 further comprising:
a back-end platform communicatively coupled to the portable device, wherein the portable device transmits detected data to the back-end platform for storage and analysis; and
a front-end platform communicatively coupled to the back-end platform, wherein the front-end platform comprises a user interface for presenting the results of analysed data to the user.

4. The system as claimed in any preceding claim, wherein the portable device is a wearable badge device that comprises an accelerometer, and the portable device operates in a low power mode until movement of user is detected by the accelerometer.

5. The system as claimed in any preceding claim, wherein the first and second IR transparent windows are made of Germanium (Ge), Zinc Selenide (ZnSe), or Calcium Fluoride (CaF2).

6. The system as claimed in any preceding claim, wherein the portable device further comprises one or more environmental sensors selected from a group consisting of: a radiation sensor, a gas sensor, a temperature sensor, humidity sensor, and a volatile organic sensor (VOC), and wherein the processing unit analyses data detected by the one or more environmental sensors.

7. The system as claimed in any preceding claim, wherein the user interface platform alerts the user via audio and visual notifications when instantaneous levels of anaesthetic gases in the sample gas reaches a predetermined threshold.

8. The system as claimed in any preceding claim, wherein each of the sealed gas chamber, the gas inlet and gas outlet are formed of steel.

9. The system as claimed in any preceding claim, wherein each of the gas inlet, gas outlet and sealed gas chamber are formed of silvered plastics.
